# EUROPÄISCHE PATENTSCHRIFT

(11) **EP 3 115 388 B1**
(45) Veröffentlichungstag und Bekanntmachung des Hinweises auf die Patenterteilung: **15.05.2019**
(21) Anmeldenummer: 16001139.1
(22) Anmeldetag: 19.05.2016
(51) Int. Cl.: C08G 18/48, C08G 18/75, C08G 18/79, C08G 18/10, C09D 175/04, C08G 18/38, C09D 175/12

(54) **VERWENDUNG EINES REAKTIVSYSTEMS ZUR BAUWERKSABDICHTUNG UND EINE BAUWERKSABDICHTUNG**
USE OF A REACTIVE SYSTEM FOR SEALING STRUCTURES AND STRUCTURE SEAL
UTILISATION D'UN SYSTEME DE REACTION DESTINE A L'ETANCHEITE DE CONSTRUCTION ET JOINT D'ETANCHEITE DE CONSTRUCTION

(30) Priorität: 06.07.2015 DE 102015110841
(43) Veröffentlichungstag der Anmeldung: 11.01.2017
(73) Patentinhaber: REVOPUR GmbH, 97318 Kitzingen (DE)
(72) Erfinder: Sven, Luckert, 97320 Sulzfeld (DE); Schmalstieg, Lutz, 51065 Köln (DE)
(74) Vertreter: Gleim, Christian Ragnar

(56) Entgegenhaltungen:
- DE-A1-102008 024 352

## Beschreibung

Die vorliegende Erfindung betrifft die Verwendung eines Reaktivsystems zur Bauwerksabdichtung z.B. bei der Herstellung von mechanisch belastbaren Bereichen auf Flachdächern, Balkonen und Terrassen.

Die Abdichtung von Dachflächen, Balkonen und Terrassen mithilfe bituminöser oder polymerer Beschichtungsmaterialien ist gängige Praxis. Hierbei werden auf den Untergrund, der aus Holz, Metall oder Beton besteht, zunächst eine oder mehrere Isolierschichten aufgebracht und anschließend wird eine ein- oder mehrlagige Abdichtungsschicht aufgebracht. Diese Abdichtungsschicht besteht entweder aus polymeren oder bituminösen Abdichtungsfolien, die im Dach- und Anschlussbereich ausgelegt werden und an den Rändern und im Überlappungsbereich mit Klebdichtmassen, Schmelzklebebändern, thermisch oder mit Quellschweißmittel miteinander verbunden werden. Es ist von Nachteil, dass Infolge der Überlappungen mit dieser Abdichtungsvariante grundsätzlich keine vollkommen ebenen Flächen hergestellt werden können.

Bituminöse Beschichtungsmaterialien zeigen außerdem eine mangelhafte Reißdehnung und sind auch nur wenig durchstoßfest. Zur Verbesserung der Durchstoßfestigkeit wird deshalb in der US 5525399 eine Modifizierung mit Polysulfiden und Gummipartikeln vorgeschlagen. Diese Maßnahme verbessert aber weder die Durchstoßfestigkeit noch die Elastizität in ausreichendem Maße. Deshalb werden bituminöse Beschichtungsmaterialien grundsätzlich als gewebeverstärkte Bahnenware geliefert, die verklebt oder mechanisch befestigt werden muss. Durch Überlappungen, ausgetretene Schweißraupen oder mechanische Befestigungselemente entstehen bei der Abdichtung mit Bituminösen Materialien grundsätzlich keine ebenen Flächen.

Bei Flachdächern mit einer Vielzahl von Dachdurchdringungen und Neigung von weniger als 10% sowie zur Abdichtung von Balkonen und Terrassen werden vielfach reaktive Polymermaterialien eingesetzt, die als flüssige, im wesentlichen lösemittelfreie Beschichtungsmaterialien im Dachbereich aufgebracht werden und anschließend aushärten.

Lösemittelfreie Beschichtungsmaterialien für die Abdichtung von Flachdächern Balkonen und Terrassen sind in großer Anzahl im Markt. Diese basieren typischerweise auf ungesättigten Polyestern, Polyurethanen oder Acrylatcopolymeren. Geeignete polymere Beschichtungsmaterialien sind in der EOTA-Leitlinie ETAG Nr. 005 (Leitlinie für die europäische Technische Zulassung für flüssig aufzubringende Dachabdichtungen) genauer spezifiziert: Zum einen müssen die Massen dauerhaft, d.h. auch nach Alterung, hinreichend elastisch sein, um die durch Temperaturwechsel entstehenden Spannungen aufzufangen; zum anderen müssen die Beschichtungen mechanisch belastbar sein, um Undichtigkeiten infolge Durchstoßung, z.B. punktuelle Belastung mit hohem Druck oder durch herab fallende Gegenstände, zu vermeiden. Eine hinreichende Beständigkeit gegenüber mechanischer Beschädigung wird in der EOTA Leitlinie über einem weiten Temperaturbereich gefordert und muss durch Messung des Widerstandes gegenüber statischem und dynamischem Eindruck nachgewiesen werden. Andererseits wird in der Leitlinie aber auch eine dauerhafte Rissüberbrückung gefordert, die durch Messung der Reißdehnung nachgewiesen werden muss.

Konventionell müssen die reaktiven Polymermaterialien des Standes der Technik auch mit einer Gewebeverstärkung verarbeitet werden, um den zum Teil gegenläufigen Forderungen der EOTA-Leitlinie bezüglich Elastizität und Durchstoßfestigkeit gerecht zu werden. Die Beschichtung mithilfe einer verstärkenden Gewebeeinlage hat aber zur Folge, dass im Zuge der Abdichtung keine vollkommen ebenen Oberflächen erhalten werden. Dies ist bedingt durch Stöße und Überlappungen des Vliesmaterials. Insbesondere bei der Abdichtung von Balkonen und Terrassen ist aber die Ausbildung einer vollkommen ebenen Oberfläche wünschenswert, um in einem oder mehreren nachfolgenden Arbeitsgängen eine dekorative Deckbeschichtung aufbringen zu können, die auch hohen Ansprüchen an Optik und Funktionalität genügt.

Eine besonders große Bedeutung für die Abdichtung von Bauwerken haben elastische, lösemittelfreie Beschichtungssysteme auf Polyurethanbasis erlangt. Typische Beschichtungssysteme auf Polyurethanbasis enthalten freie Isocyanatgruppen und werden als 1-Komponentensystem oder als 2-Komponentensystem appliziert. So hergestellte Abdichtungen sind relativ weich und sehr elastisch. Eine hinreichende Durchstoßfestigkeit, insbesondere bei statischer Belastung, wird bei diesen Systemen ebenfalls erst durch eine Gewebeeinlage erzielt. Darüber hinaus ist bei den Polyurethanabdichtungen die Reaktion der Isocyanatgruppen mit den Wassermolekülen problematisch, was zwangsläufig mit der Bildung von Kohlendioxid verbunden ist. Das Kohlendioxid kann in dünnen Schichten aus der Beschichtung entweichen, die Applikation höherer Schichtstärken hat Blasen und/oder Schaumbildung zur Folge, was wiederum Enthaftung und/oder Undichtigkeit zur Folge hat.

In gewissem Umfang kann die Problematik der Blasenbildung bei höherer Schichtstärke durch Zusatz von feuchtigkeitsreaktiven Reaktivkomponenten wie beispielsweise Ketiminen, Aldiminen oder insbesondere Oxazolanen gelöst werden. Derartige feuchtigkeitsreaktive Reaktivkomponenten werden beispielhaft beschrieben in den Patentanmeldungen WO 9855524 A1, EP 1975186 A1, EP 1975188 A1, WO 2014114642 A1, WO 2014114641 A1, WO 2014114640 A2 und der dort zitierten Literatur. Durch den Zusatz der beschriebenen feuchtigkeitsreaktiven Reaktivkomponenten kann die Blasenbildung jedoch nicht vollständig unterdrückt werden kann, da die Reaktivkomponenten des Standes der Technik gleichzeitig die Reaktion der Isocyanatgruppen mit Wasser katalysieren. Die mangelhafte Durchstoßfestigkeit der Polyurethanbeschichtungen bei Verzicht auf eine Gewebeeinlage wird durch den Zusatz der feuchtigkeitsreaktiven Reaktivkomponenten nicht verbessert.

Beschichtungssysteme auf Basis von ungesättigten Polyesterharzen sind relativ hart und demzufolge hinsichtlich ihrer elastischen Eigenschaften unzureichend: Systeme, wie sie beispielhaft in der WO 5078020 A1 genannt werden, zeigen bei dynamischer Schlagbelastung - insbesondere bei niedriger Temperatur - nur in Kombination mit Gewebeverstärkung eine hinreichende Durchstoßfestigkeit. Außerdem enthalten derartige Beschichtungssysteme in der Regel Styrol, was aus arbeitshygienischer Sicht bedenklich ist.

Beschichtungsmaterialien auf Polysulfidbasis, wie sie beispielhaft in der US 5914172 beschrieben werden, sind hervorragend elastisch, aber mechanisch so wenig belastbar, dass Gummipartikel zugemischt werden müssen. Diese Maßnahme verbessert die Durchstoßfestigkeit aber nur unzureichend, so dass auch derartige Beschichtungsmaterialien nur mit Hilfe einer Gewebeverstärkung hinreichend durchstoßfest aufgebracht werden können.

Weiterhin sind Dachbeschichtungssysteme auf Acrylatbasis bekannt. Diese sind relativ starr und zeigen bei dynamischer Schlagbelastung - insbesondere bei niedriger Temperatur - nur in Kombination mit Gewebeverstärkung eine hinreichende Durchstoßfestigkeit. Diese Problematik wird bereits in der EP 2839952 offenbart. Problematisch ist daneben die Tatsache, dass diese Systeme größere Mengen an geruchsintensiven und physiologisch bedenklichen Acrylatmonomeren als reaktive Verdünner enthalten.

Auch die Beschichtungssysteme auf Basis von Polyurethan-modifizierten Epoxidharzen, wie Sie beispielhaft beschrieben werden in der DE102012201873A1, sind relativ starr und zeigen bei dynamischer Schlagbelastung, insbesondere bei niedriger Temperatur, nur in Kombination mit Gewebeverstärkung eine hinreichende Durchstoßfestigkeit.

In jüngerer Zeit sind vermehrt Beschichtungssysteme auf Basis von Alkoxysilanterminierten Polyethern und/oder Polyurethanen als reaktive polymere Beschichtungssysteme für die Bauwerksabdichtung bekannt geworden. Derartige Beschichtungssysteme werden beispielhaft beschrieben in der WO 2010 070 109. Derartige Beschichtungssysteme sind grundsätzlich sehr weich und besitzen ohne Gewebeverstärkung keinerlei Durchstoßfestigkeit.

Es lässt sich feststellen, dass die lösemittelfreien Abdichtungsmaterialien des Standes der Technik grundsätzlich mithilfe einer verstärkenden Gewebeeinlage - typischerweise einem Vliesmaterial - verarbeitet werden müssen, um den gegenläufigen Forderungen der EOTA Leitlinie bezüglich Elastizität und Durchstoßfestigkeit zu genügen.

Im Hinblick auf die Abdichtung von Balkonen und Terrassen und die Ausbildung einer vollkommen ebenen Oberfläche war es daher Aufgabe der vorliegenden Erfindung, eine Abdichtung bereitzustellen, welches eine hohe Elastizität und Durchstoßfestigkeit erzielt und das insbesondere ohne die Zuhilfenahme eines verstärkenden Gewebematerials den Kriterien der EOTA-Leitlinie ETAG 005 genügt.

Polyurea-Systeme für die Bauwerksabdichtung sind in jüngerer Zeit vermehrt bekannt geworden. Diese Systeme bestehen aus einer aromatischen und/oder aliphatischen Isocyanatkomponente sowie aus einer Polyaminkomponente auf Basis aromatischer und/oder aliphatischer primärer und/oder sekundärer Amine. Derartige Polyurea-Systeme sind hochreaktiv, härten innerhalb weniger Sekunden aus und sind breit beschrieben, beispielhaft in der US 5 162 388 oder der US 5 442 034. Bei diesen Systemen ist die Reaktion der Isocyanatgruppen mit den Amingruppen so schnell, dass die Reaktion mit Feuchtigkeit, die zur Blasenbildung führt, vollständig unterbleibt. Aufgrund der hohen mechanischen Festigkeit der entstehenden polymeren Beschichtung, sind derartige hochreaktive Polyurea-Systeme grundsätzlich zur Abdichtung von Bauwerken oder zur Abdichtung von Bauwerksteilen - insbesondere auch ohne Gewebeverstärkung - geeignet, können aber nur unter Zuhilfenahme eines aufwändigen und teuren 2-Komponenten-Spritzequipments verarbeitet werden.

Die anwendungstechnische Erfahrung mit diesen Produkten in der Vergangenheit hat aber gezeigt, dass diese Systeme aufgrund der besonders hohen Reaktivität keine Zeit für eine ausreichende Benetzung des Untergrundes haben, weswegen es kaum möglich ist, mit derartigen Systemen reproduzierbare Haftzugsfestigkeiten über die gesamte zu beschichtende Fläche zu erzielen. Somit ist für die hochreaktiven Polyurea-Systeme des Standes der Technik keine ausreichende Applikationssicherheit gegeben. Im Rahmen der Aufgabenstellung sind diese hochreaktiven Systeme daher nicht geeignet.

In der Vergangenheit hat es aufgrund der beschriebenen Problematik vielfältige Bemühungen gegeben, die Reaktivität solcher Systeme zu vermindern. Einen technologisch großen Fortschritt bieten Polyurea-Systeme auf Basis von Isocyanaten und Polysparaginsäureestern, wie sie durch Addition von Maleinsäure- und/oder Fumarsäureestern an Polyamine entstehen. Solche Polyurea-Systeme sind grundsätzlich bekannt und werden beispielhaft in folgenden Patentdokumenten beschrieben: EP 403 921, EP 0573860, US 6605684, EP 1767559, WO 2001007504, WO 2001007399, US 6458293, EP 1426397, DE 102006002153A1 oder der WO 2004033517.

Auch wenn in vielen der genannten Veröffentlichungen Beton als mögliches zu beschichtendes Substrat genannt wird, ist es bisher nicht gelungen, derartige Polyurea-Systeme auf Basis von Isocyanaten und Polysparaginsäureestern dahingehend zu optimieren, dass sie als Flüssigabdichtung im Baubereich unter realistischen Baustellenbedingungen eingesetzt werden können: Gefordert wird hierbei eine Unempfindlichkeit gegenüber Feuchtigkeit auf oder aus dem Untergrund, eine einfache Verarbeitung von Hand, sowie eine ausreichende Verarbeitungszeit, die eine ausreichende Benetzung des Untergrundes sicherstellt.

Der Erfindung liegt die Aufgabe zugrunde, eine verbesserte Bauwerksabdichtung bereitzustellen, die die im Stand der Technik genannten Nachteile überwindet. Der Erfindung liegt insbesondere die Aufgabe zugrunde, eine Bauwerksabdichtung bereitzustellen, mit der eine hohe Elastizität bei guter Durchstoßfestigkeit erreicht wird und die insbesondere die Anforderungen aus der EOTA-Leitlinie ETAG Nr. 005 (Leitlinie für die europäische Technische Zulassung für flüssig aufzubringende Dachabdichtungen) erfüllt.

Die Aufgabe wird durch eine Verwendung eines Reaktivsystems zur Bauwerksabdichtung und eine Bauwerksbeschichtung gemäß den jeweiligen unabhängigen Ansprüchen gelöst.

Gegenstand der Erfindung ist die Verwendung eines Reaktivsystems zur Bauwerksabdichtung, wobei das Reaktivsystem enthält
i) mindestens ein freie Isocyanatgruppen aufweisendes Prepolymer mit einem Gehalt an aliphatisch gebundenen NCO-Gruppen von 7,0 bis 12 Gew. -%, erhältlich durch Urethanisierung von aliphatischen Di- oder Polyisocyanaten mit mindestens einem durch Alkoxylierung hydroxyfunktioneller Startermoleküle erhältlichen Polyoxyalkylenpolyol mit einer mittleren Hydroxyfunktionalität von 1,5 bis 3 und einem Äquivalentgewicht von mindestens 400 g/Mol,
ii) mindestens einen aminofunktionellen Polyasparaginsäureester der allgemeinen Formel 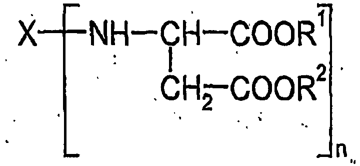 in der X für einen n-wertigen organischen Rest steht, der durch Entfernung der Aminogruppen aus einem Polyamin, ausgewählt aus der Gruppe 1-Amino-3, 3, 5-trimethyl-5-aminomethyl-cyclohexan, 2, 4-und/oder 2, 6-Hexahydrotoluylendiamin, 2, 4'- und/oder 4, 4'- Diamino-dicyclohexylmethan, 3, 3'-Dimethyl-4, 4'-diaminodicyclohexymethan, 2, 4, 4'-Triamino-5-methyl-dicyclohexylmethan erhalten wird und R1 und R2 für eine Methyl- oder eine Ethylgruppe stehen
iii) Füllstoffe, Hilfs- und Zusatzstoffe.

Der Erfindung liegt die überraschende Beobachtung zugrunde, dass bestimmte Polyurea-Systeme auf Basis von Isocyanatprepolymeren und Polyasparaginsäureestern eine besonders gute Durchstoßfestigkeit besitzen, so dass diese Systeme auch ohne Vliesarmierung angewendet werden können. Gleichzeitig wurde die überraschende Beobachtung gemacht, dass derartige Polyurea-Systeme auch auf feuchten Untergründen blasen- und porenfrei aushärten und eine ausgezeichnete Haftung bei nahezu allen im Baubereich relevanten Untergründen besitzen.

Die Isocyanatkomponente (i) ist ein Isocyanatgruppen aufweisendes Prepolymer mit einem NCO-Gehalt von 7 bis 12 Gew. -%, vorzugsweise 7,5 bis 11 Gew. -%, besonders bevorzugt 8 bis 10 Gew.-%, das erhältlich ist durch Urethanisierung mindestens eines Polyisocyanats mit einem oder mehreren Polyetherpolyolen, die durch Alkoxylierung von hydroxyfunktionellen Starterverbindungen mit Propylenoxid oder Gemischen aus Propylenoxid und Ethylenoxid unter Zuhilfenahme von Katalysatoren wie beispielsweise basischen Katalysatoren wie Alkalihydroxiden oder auch sog. DMC-Katalysatoren, wie sie in der EP-A 700 949, EP-A 761 708 und WO 97/40086 offenbart werden, erhältlich sind. Einsetzbare Polyether bzw. Polyethermischungen besitzen eine mittlere Hydroxyfunktionalität von 1,5 bis 3, bevorzugt 1,8 bis 2,5 und ein Äquivalentgewicht von mindestens 400 g/Mol, bevorzugt 500 bis 4000 g/Mol, besonders bevorzugt 700 bis 2000g/Mol.

Als Polyisocyanate zur Herstellung der Isocyanatgruppen aufweisenden Prepolymere (i) kommen aliphatische und cycloaliphatische Polyisocyanate der bekannten Art in Betracht: Beispielhaft genannt seien 4, 4'-Diisocyanatodicyclohexylmethan, 3-Isocyanatomethyl- 3,3, 5-trimethylcyclohexylisocyanat (Isophorondiisocyanat = IPDI), Hexamethylendiisocyanat (HDI), 2- 2,2, 4-Trimethylhexamethylendiisocyanat (THDI) und a, a, a', a'-Tetramethyl-m-xylylen-diisocyanat oder a, a, a', a'-Tetramethyl-p-xylylendiisocyanat (TMXDI) sowie aus diesen Verbindungen bestehende Gemische. Zur Herstellung der Isocyanatgruppen aufweisenden Prepolymere werden das Polyisocyanat und das Polyoxyalkylenpolyol oder Gemische daraus unter Einhaltung eines NCO/OH Äquivalentverhältnisses von 1,5 : 1 bis 10 : 1 unter Urethanbildung umgesetzt. Die Umsetzung findet statt bei Temperaturen von 40° bis 140° C, vorzugsweise 50° bis 110° C. Bei Verwendung eines Überschusses an Polyisocyanat von mehr als 2 : 1 wird überschüssiges monomeres Polyisocyanat nach der Umsetzung durch in der Technik übliche destillative oder extraktive Verfahren, z. B. durch Dünnschichtdestillation entfernt.

Die so erhältlichen Isocyanatgruppen aufweisenden Prepolymere besitzen einen Gehalt an freien Isocyanatgruppen, der für die erfindungsgemäße Verwendung häufig zu niedrig ist. Deshalb müssen die so hergestellten Isocyanatgruppen aufweisenden Prepolymere mit niedrigviskosen Polyisocyanaten, vorzugsweise Polyisocyanaten auf Basis von Hexamethylendiisocyanat abgemischt werden, damit sie den oben gemachten Angaben bezüglich des NCO-Gehaltes entsprechen. Derartige niedrigviskose Polyisocyanate werden mit Hilfe geeigneter Modifizierungsreaktionen, wie z. B. Dimerisierung, Trimerisierung, Biuretisierung, Allophanatisierung und/oder Urethanisierung hergestellt, wobei überschüssiges monomeres Diisocyanat anschließend destillativ aus dem Gemisch entfernt wird, wodurch die Polyisocyanate Restgehalte an monomerem Diisocyanat von <0,5% bez. auf das Gesamtgemisch der Polyisocyanatmischung enthalten (siehe dazu auch: Laas et al "J. Prakt. Chem, 336, 1 94, 185-200 und Nachrichten aus der Chemie, 55, 380-384, 2007). Bevorzugt einsetzbar sind Isocyanuratgruppen aufweisende Polyisocyanate, wie sie z.B. in der US-PS 3 001 973, in den DE-PS 1 022 789, 1 222 067 und 1 027 394 sowie in den DE-OS 1 929 034 und 2 004 048 beschrieben werden und/oder Allophanatgruppen aufweisende Polyisocyanate, wie sie z.B. in der GB-PS 994 890, in der BE-PS 761 626 und in der NL-OS 7 102 524 beschrieben werden. Besonders bevorzugt einsetzbar sind Allophanatgruppen und/oder Isocyanuratgruppen aufweisende Polyisocyanate auf Basis von Hexamethylendiisocyanat, die den oben gemachten Angaben entsprechen und darüber hinaus durch einen Gehalt an Isocyanatgruppen (NCO-Gehalt) von 17-23% und eine mittlere Isocyanatfunktionalität von 2,5 bis 3,3 gekennzeichnet sind.

Besonders bevorzugt ist die Verwendung von Isocyanatgruppen aufweisenden Prepolymeren, die durch direkte Umsetzung der oben beschriebenen Polyetherpolyole mit den vorstehend beschriebenen Polyisocyanaten auf Basis von Hexamethylendiisocyanat erhalten werden. So können in einem einzigen Reaktionsschritt Isocyanatgruppen aufweisende Prepolymere hergestellt werden, die den vorstehend gemachten Angaben entsprechen und im Sinne der Erfindung besonders bevorzugt einsetzbar sind.

Die Umsetzung kann beschleunigt werden durch Verwendung von Katalysatoren, die die Urethanbildung beschleunigen. Die Mitverwendung derartiger Katalysatoren ist jedoch weniger bevorzugt.

Bevorzugte Härterkomponenten (ii) sind aminofunktionelle Polyasparaginsäureester der allgemeinen Formel 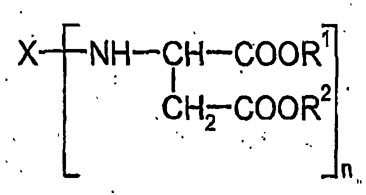 in der X für einen n-wertigen organischen Rest steht, der durch Entfernung der Aminogruppen aus einem Polyamin, ausgewählt aus der Gruppe 1-Amino-3, 3, 5-trimethyl-5-aminomethyl-cyclohexan, 2, 4-und/oder 2, 6-Hexahydrotoluylendiamin, 2, 4'- und/oder 4, 4'- Diamino-dicyclohexylmethan, 3, 3'-Dimethyl-4, 4'-diaminodicyclohexymethan, 2, 4, 4'-Triamino-5-methyl-dicyclohexylmethan erhalten wird und R1 und R2 für eine Methyl- oder eine Ethylgruppe stehen. Bevorzugt steht X für einen 2-wertigen Rest der durch Entfernung der Aminogruppen des 1-Amino-3, 3, 5-trimethyl-5-aminomethyl-cyclohexan und/oder des 2, 4'-undloder 4, 4'- Diaminodicyclohexylmethans entsteht. Besonders bevorzugt steht X für einen 2-wertigen Rest der durch Entfernung der Aminogruppen des 2, 4'-und/oder 4, 4'- Diaminodicyclohexylmethans entsteht. R1 und R2 stehen bevorzugt für eine Ethylgruppe.

Die Herstellung der aminofunktionellen Polyasparaginsäureester (ii) erfolgt in an sich bekannter Weise durch Umsetzung der entsprechenden primären Polyamine der Formel [X]+NH₂ mit Malein- oder Fumarsäureestern der allgemeinen Formel R¹ OOCCH=CHCOOR². Geeignete Polyamine sind die oben genannten Diamine. Beispiele geeigneter Malein- oder Fumarsäureester sind Maleinsäuredimethylester und bevorzugt Maleinsäurediethylester sowie die entsprechenden Fumarsäureester.

Die Herstellung der aminofünktionellen Polyasparaginsäureester (ii) aus den genannten Ausgangsmaterialien erfolgt bevorzugt innerhalb des Temperaturbereichs von 0° bis 100° C, wobei die Ausgangsmaterialien in solchen Mengenverhältnissen eingesetzt werden, dass auf jede primäre Aminogruppe mindestens eine, vorzugsweise genau eine olefinische Doppelbindung entfällt, wobei im Anschluss an die Umsetzung gegebenenfalls im Überschuss eingesetzte Ausgangsmaterialien destillativ abgetrennt werden können. Die Umsetzung kann in Substanz oder in Gegenwart geeigneter Lösungsmittel wie Methanol, Ethanol, Propanol oder Dioxan oder Gemischen derartiger Lösungsmittel erfolgen, wobei die Mitverwendung von Lösungsmitteln weniger bevorzugt ist.

Die zu verwendenden reaktiven Beschichtungssysteme enthalten weiterhin als Komponente iii) die in der Beschichtungstechnologie üblichen Füllstoffe, Hilfs- und Zusatzmittel wie beispielsweise Füllstoffe, Flammschutzmittel, Pigmente, Verlaufshilfsmittel, Thixotropiermittel, Lösungsmittel oder Weichmacher wie beispielsweise Phtalsäureester, Phosphorsäureester, Alkylsulfonsäureester, Adipinsäureester, Benzoesäureester oder andere Viskositätsregulatoren.

Lösungsmittel können gegebenenfalls in geringen Mengen als Viskositätsregulatoren mitverwendet werden, d.h. in Mengen von weniger als 5 Gew.-%, bevorzugt weniger als 2 Gew.-% besonders bevorzugt weniger als 1 Gew.-% bezogen auf das Gesamtgewicht des reaktiven Beschichtungssystems. Geeignete Lösungsmittel sind insbesondere die üblichen Lacklösemittel, wie beispielsweise Ethylacetat, Butylacetat, Methoxypropylacetat, Methylethylketon, Methylisobutylketon, Toluol, Xylol, aromatische oder (cyclo-)aliphatische Kohlenwasserstoffgemische oder beliebigen Gemischen derartiger Lösungsmittel.

Vorzugsweise enthalten die einsetzbaren reaktiven Beschichtungssysteme als Komponente iii) anorganische Flammschutzmittel sowie ggf. zusätzlich organische Flammschutzmittel. Als anorganische Flammschutzmittel seien Aluminiumhydroxid und Magnesiumhydroxid genannt, wobei vorzugsweise Aluminiumhydroxid in Pulverform mit Teilchengrößen von 0,1 µm bis 100 µm eingesetzt wird. Ferner bevorzugt wird Aluminiumhydroxid in Mengen zwischen 15 und 30 Gew% bezogen auf das Gesamtgewicht der Abdichtung eingesetzt, besonders bevorzugt in Kombination mit 2 bis 10 Gew% an (flüssigen) Phosphorsäureestern.

Als organische Flammschutzmittel seien insbesondere Phosphorsäureester genannt wie beispielsweise Triethylphosphat, Tributylphosphat, Tris-2-ethylhexylphosphat, Triphenylphosphat, Diphenyloctylphosphat oder Trikresylphosphat. Die Mitverwendung von Tris-2-ethylhexylphosphat ist bevorzugt.

Besonders bevorzugt wird eine Kombination von pulverförmigen Aluminiumhydroxid und Tris-2-ethylhexylphosphat als Flammschutzmittel eingesetzt.

Neben den genannten Flammschutzmitteln können die Beschichtungssysteme weitere Füllstoffe enthalten. Geeignete weitere Füllstoffe sind Sande, Gesteinsmehl, Quarzmehl, Talkum, natürliche, gemahlene oder gefällte Calciumcarbonate, welche ggf. mit Fettsäuren beschichtet sein können, Bariumsulfat (BaSO₄, auch Baryt oder Schwerspat genannt), sowie Kieselsäuren, insbesondere hochdisperse Kieselsäuren aus Pyrolyseprozessen.

Als Pigmente sind prinzipiell alle aus der Beschichtungstechnologie an sich bekannten organischen und anorganischen Pigmente einsetzbar. Bevorzugt enthalten die Beschichtungssysteme aber nur anorganische Pigmente wie Eisenoxidpigmente, Titandioxid und/oder Ruß.

In einer besonders bevorzugten Ausführungsform enthalten die Beschichtungssysteme als Komponente iii) Gummpartikel (z.B. elastischer Kautschuk). Geeignete sind auch Gummimehle, insbesondere solche, wie sie durch Kalt- oder Warmvermahlung von NR/SBR-Kautschukmischungen beim Recycling von LKW-Reifen erhalten werden. Geeignete Gummimehle haben typischerweise eine Korngröße zwischen 0,1 mm und 0,6 mm und können in Mengen von bis zu 20 Gew.%, bevorzugt bis zu 15 Gew.% als Komponente iii) verwendet werden, bezogen auf das Gesamtgewicht des reaktiven Beschichtungssystems.

Als Komponente iii) können die einzusetzenden Beschichtungsmittel weiterhin reaktive Verdünner enthalten. Als reaktive Verdünner einsetzbar sind beispielsweise Asparaginsäureester auf Basis von Polyetheraminen, so wie dies in der WO 2014151307 A1 offenbart wird. Es können aber bevorzugt auch Polyetherpolyole der vorstehend charakterisierten Art als reaktive Verdünner mitverwendet werden. Die genannten reaktiven Verdünner können in einem Massenanteil von weniger als 15%, bevorzugt weniger als 10% mitverwendet werden.

Als weitere Hilfs- und Zusatzmittel iii) seien Entlüftungsmittel, Entschäumer, Katalysatoren, Alterungsschutzmittel, Verlaufshilfsmittel und Haftvermittler genannt.

Als Alterungsschutzmittel seien an dieser Stelle Antioxidationsmittel, UV-Absorber und Radikalfänger sowie entsprechende Kombinationen aus diesen Alterungsschutzmitteln genannt.

Als Haftvermittler seien an dieser Stelle funktionelle Silane, wie beispielsweise Aminosilanverbindungen, Epoxysilanverbindungen oder Vinylsilanverbindungen benannt. Geeignet sind insbesondere solche funktionellen Silane, die über keine funktionelle Gruppe verfügen, die gegenüber Isocyanatgruppen bei Umgebungstemperatur reaktiv ist.

Zur Herstellung der einsetzbaren Reaktivsysteme werden die Komponenten (i) und (ii) in einem Mengenverhältnis eingesetzt, dass das Äquivalentverhältnis der Isocyanatgruppen der Komponente (i) zu den Aminogruppen der Komponente (ii) 0,5: 1 bis 1,5 : 1, vorzugsweise 0,9 : 1 bis 1,3 : 1 beträgt.

Die einsetzbaren reaktiven Beschichtungssysteme enthalten typischerweise einen Massenanteil 30-60 Gew.%, vorzugsweise 40 bis 50 Gew.% an Komponente i), einen Massenanteil von 15 bis 40 Gew.%, vorzugsweise 20 bis 35 Gew.% an Komponente ii) und einen Massenanteil von 15 bis 45 Gew.%, vorzugsweise 20 bis 40 Gew.% an Komponente iii).

Die einzusetzenden reaktiven Beschichtungssysteme werden typischerweise als 2-Komponentensysteme bestehend aus einer Harzkomponente und einer Härterkomponente formuliert. Die Harzkomponente enthält dabei die Komponenten ii) und iii). Gegebenenfalls können Lösungsmittel und Viskositätsregulatoren sowie Alterungsschutzmittel der Komponente i) zugegeben werden, so dass 2-Komponentensystem entsprechend einem Gewichtsverhältnis von 30:70 bis 70:30, vorzugsweise 60:40 bis 40:60 und besonders bevorzugt 45:55 bis 55:45 erhalten werden.

Zur Herstellung der verwendbaren Beschichtungs-systeme werden die Einzelkomponenten unmittelbar vor der Applikation intensiv miteinander vermischt. Die Reaktionsgemische reagieren bereits bei Raumtemperatur zu Polyharnstoffen aus und weisen deswegen nur eine begrenzte Topfzeit auf. Innerhalb dieser Topfzeit müssen die Reaktionsgemische verarbeitet werden. Die verwendbaren Beschichtungsmittel weisen bei 23° C eine Topfzeit von 15 bis 40 Minuten auf, wobei Topfzeit definiert ist als der Zeitraum, in dem die Beschichtung homogen, ohne Fäden zu ziehen, applizierbar ist.

Die einzusetzenden reaktiven Beschichtungs-systeme sind gießfähig oder fließfähig und besitzen selbstverlaufende Eigenschaften und können sowohl bei kälteren Außentemperaturen als auch bei höheren Sommertemperaturen sehr gut verarbeitet bzw. verwendet werden. Sie besitzen typischerweise bei einer Temperatur von 23°C eine Viskosität im Bereich von 2.000 mPas bis 25.000 mPas auf, vorzugsweise von 3.000 mPas bis 20.000 mPas, besonders bevorzugt 5.000 mPas bis 15.000 mPas, wobei die Viskosität rotationsviskosimetrisch bestimmt wird.

Die aus den Einzelkomponenten erhältlichen, verwendbaren Beschichtungsmittel können nach an sich bekannten Methoden, wie beispielsweise durch Spritzen, Streichen, Fluten oder mit Hilfe von Walzen oder Rakeln auf beliebige Untergründe im Baubereich aufgetragen werden. Sie härten - abhängig von den umgebenden klimatischen Bedingungen - innerhalb von 30 bis 90 Minuten zu zähharten Beschichtungen aus, die elastisch, aber trotzdem mechanisch extrem widerstandsfähig sind und eine überragende Haftung zu diversen Untergründen zeigen. Überraschenderweise härten die Abdichtungen auch auf restfeuchten Untergründen und insbesondere auch auf jungem Beton, d.h. Beton mit einem Alter von 7 Tagen, völlig blasen- und porenfrei aus. Dabei scheint also die CO₂-bitdende Reaktion der freien Isocyanatgruppen mit der Feuchtigkeit in diesen Beschichtungssystemen überraschenderweise vollständig unterdrückt zu werden, selbst wenn entsprechend den vorstehend gemachten Angaben mit einem signifikanten stöchiometrischen Überschuss an Isocyanatgruppen gearbeitet wird.

Die Beschichtungssysteme genügen mit ihren harten und gleichzeitig elastischen Eigenschaften auch ohne die Verwendung von verstärkenden Gewebeeinlagen den Kriterien der EOTA-Leitlinie ETAG 005 für die jeweils höchsten Belastungsklassen, insbesondere im Hinblick auf die Durchstoßfestigkeit auf harten und weichen Untergründen sowohl bei hohen als auch bei tiefen Temperaturen. Selbstverständlich können die Beschichtungsmassen auch mit einer verstärkenden Gewebeeinlage appliziert werden. Dies kann in besonders hochbelasteten Bereichen wie Anschlüssen oder Dehnfugen ratsam sein. Als Gewebeeinlagen sind in diesen Fällen alle gewirkten, gestrickten, gewebten, geflochtenen, gehäkelten oder auf sonstige Art aus Garnen oder Fasern hergestellten textilen Flächengebilde geeignet. Geeignete verstärkende Flächengewebe basieren auf organischen oder anorganischen Fasern wie beispielsweise Glasfasern, Kohlefasern oder Kunststofffasern wie beispielsweise Polyester-, Polyamid-, Aramid- oder Polyacrylatfasern. Vorzugsweise werden Vliesmaterialien eingesetzt wie beispielsweise Glasfaservliese oder Polyestervliese. Besonders bevorzugt werden Polyestervliese mit einem Raumgewicht von 80 bis 190 g/m² vorzugsweise 110 bis 165 g/m² eingesetzt.

Bevorzugt werden die verwendbaren Beschichtungssysteme auf einem mit einer Grundierung vorbehandelten Beton appliziert. Als Poren verschließende Grundierung für Beton sind insbesondere die handelsüblichen Grundierungen auf Epoxydharzbasis und auch solche auf Acrylat-Basis einsetzbar. In einer besonders bevorzugten Ausführungsform erfolgt die Applikation auf einer Polyurea-Grundierung auf Basis von aliphatischen Polyisocyanaten und/oder Polyisocyanatprepolymeren und Polyasparaginsäureestern ii). Bei dieser bevorzugten Ausführungsform kann besonders schnell und rationell gearbeitet werden, wobei eine ausgezeichnete Zwischenschichthaftung zwischen Grundierung und Abdichtungsschicht resultiert.

In einer besonderen Ausführungsform der vorliegenden Erfindung bei der Abdichtung von Balkonen und Terrassen wird auf die Abdichtungsschicht zusätzlich eine dekorative Deckschicht aufgebracht. Besonders bevorzugt ist in diesem Zusammenhang die Applikation einer Deckschicht auf Basis von aliphatischen Polyisocyanaten und/oder Polyisocyanatprepolymeren und Polyasparaginsäureestern ii). Derartige Deckschichten zeigen eine hervorragende Licht- und UV-Beständigkeit, eine ausgezeichnete Abrasionsfestigkeit sowie eine überragende Zwischenschichthaftung zwischen Abdichtung und Deckschicht.

Die Deckschicht kann beispielsweise aus einer relativ harten, pigmentierten, gegebenenfalls mit Quarzsand gefüllten Beschichtung bestehen.

Alternativ kann die Deckschicht als sogenannter Natursteinteppich ausgeführt sein, wobei Natursteine wie beispielsweise Marmor oder Granit mit transparenten Bindemitteln auf Basis von aliphatischen Polyisocyanaten und/oder Polyisocyanatprepolymeren und Polyasparaginsäureestern ii) als Spachtelmassen appliziert werden.

Weiterhin kann die Deckschicht als sogenannter Einstreubelag ausgeführt werden, wobei in eine Einbettmasse auf Basis von aliphatischen Polyisocyanaten und/oder Polyisocyanatprepolymeren und Polyasparaginsäureestern ii) feinteiliger Sand und/oder Coloritquarz und/oder Granit im Überschuss eingestreut wird. Nach dem Entfernen von überschüssigem Sand, Coloritquarz und/oder Granit müssen derartige Einstreubeläge nochmals mit einer transparenten Versiegelung auf Basis von aliphatischen Polyisocyanaten und/oder Polyisocyanatprepolymeren und Polyasparaginsäureestern ii) überversiegelt werden.

Vorteilhafterweise betrifft die Erfindung weiterhin eine Bauwerksbeschichtung mit mindestens einer Schicht umfassend ein Reaktivsystem enthaltend
i) mindestens ein freie Isocyanatgruppen aufweisendes Prepolymer mit einem Gehalt an aliphatisch gebundenen NCO-Gruppen von 7,0 bis 12 Gew. -%, erhältlich durch Urethanisierung von aliphatischen Di- oder Polyisocyanaten mit mindestens einem durch Alkoxylierung hydroxyfunktioneller Startermoleküle erhältlichen Polyoxyalkylenpolyol mit einer mittleren Hydroxyfunktionalität von 1,5 bis 3 und einem Äquivalentgewicht von mindestens 400 g/Mol,
ii) mindestens einen aminofunktionellen Polyasparaginsäureester der allgemeinen Formel 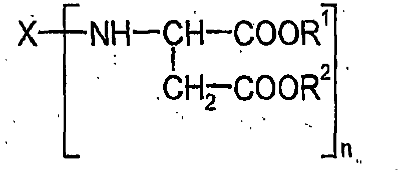 in der X für einen n-wertigen organischen Rest steht, der durch Entfernung der Aminogruppen aus einem Polyamin, ausgewählt aus der Gruppe 1-Amino-3, 3, 5-trimethyl-5-aminomethyl-cyclohexan, 2, 4-und/oder 2, 6-Hexahydrotoluylendiamin, 2, 4'- und/oder 4, 4'- Diamino-dicyclohexylmethan, 3, 3'-Dimethyl-4, 4'-diaminodicyclohexymethan, 2, 4, 4'-Triamino-5-methyl-dicyclohexylmethan erhalten wird und R1 und R2 für eine Methyl- oder eine Ethylgruppe stehen
iii) Füllstoffe, Hilfs- und Zusatzstoffe.

Bevorzugt umfasst die Bauwerksbeschichtung ferner eine Grundierung auf Basis von Isocyanatgruppen aufweisenden Prepolymeren und aminofunktionellen Polyasparaginsäureestern.

Die Bauwerksbeschichtung umfasst alternativ oder additiv eine Verschleißbeschichtung auf Basis von Isocyanatgruppen aufweisenden Prepolymeren und aminofunktionellen Polyasparaginsäureestern.

Besonders bevorzugt besteht die Bauwerksbeschichtung aus
- einer ersten Schicht einer Grundierung auf Basis von Isocyanatgruppen aufweisenden Prepolymeren und aminofunktionellen Polyasparaginsäureestern und,
- einer zweiten Schicht umfassend ein Reaktivsystem enthaltend
   i) mindestens ein freie Isocyanatgruppen aufweisendes Prepolymer mit einem Gehalt an aliphatisch gebundenen NCO-Gruppen von 7,0 bis 12 Gew. -%, erhältlich durch Urethanisierung von aliphatischen Di- oder Polyisocyanaten mit mindestens einem durch Alkoxylierung hydroxyfunktioneller Startermoleküle erhältlichen Polyoxyalkylenpolyol mit einer mittleren Hydroxyfunktionalität von 1,5 bis 3 und einem Äquivalentgewicht von mindestens 400 g/Mol,
   ii) mindestens einen aminofunktionellen Polyasparaginsäureester der allgemeinen Formel
   iii) Füllstoffe, Hilfs- und Zusatzstoffe und
- einer dritten Schicht, einer Verschleißbeschichtung, auf Basis von Isocyanatgruppen aufweisenden Prepolymeren und aminofunktionellen Polyasparaginsäureestern.

Außerdem betrifft die Erfindung ein Bauwerk (wie Flachdach, Balkon und Terrasse) mit einer Beschichtung wie hierin beschrieben.

Die nachfolgenden Beispiele sollen das Wesen der Erfindung näher erläutern ohne diese jedoch einzuschränken. Alle Angaben in % beziehen sich auf das Gewicht, die Viskositäten wurden rotationsviskosimetrisch in Anlehnung an DIN 53019-1 bestimmt.

### Beispiel 1:

### Herstellung eines Isocyanatgruppen aufweisenden Prepolymeren, Komponente i)

500 g eines difunktionellen auf Propylenglykol gestarteten Polypropylenoxidpolyethers vom mittleren Molekulargewicht 1000 (OH-Zahl = 112) werden mit 888 g Isophorondiisocyanat bei 90 °C zur Reaktion gebracht und bei dieser Temperatur solange gerührt, bis der theoretische NCO-Gehalt von 21,2% erreicht ist. Nach dem Abkühlen wird das Reaktionsgemisch durch Vakuumdünnschichtdestillation bei 145°C / 0,01 bar von monomeren Isophorondiisocyanat befreit. Man erhält ein Isocyanat-Endgruppen aufweisendes Prepolymer mit einem NCO-Gehalt von 5,7% und einer Viskosität von 11800 mPas (23°C). Dieses Prepolymer wird im Gewichtsverhältnis 80:20 abgemischt mit einem handelsüblichen Allophanatgruppen und Isocyanuratgruppen aufweisenden Polyisocyanat auf Basis von Hexamethylendiisocyanat, mit einem NCO-Gehalt von 22 % und einer Viskosität von 1100 mPas (23°C) (Basonat HA 1000, Handelsprodukt der Firma BASF SE, Ludwigshafen). Dabei erhält man eine verwendbare Polyisocyanatmischung i) mit folgenden Kennzahlen: NCO-Gehalt 8,9%, Viskosität 8200 mPas (23°C)

### Beispiel 2

### Herstellung eines Isocyanatgruppen aufweisenden Prepolymeren, Komponente i)

Das Isocyanat-Endgruppen aufweisende Prepolymer aus Beispiel 1 wird im Gewichtsverhältnis 75:25 abgemischt mit einem handelsüblichen Allophanatgruppen und Isocyanuratgruppen aufweisenden Polyisocyanat auf Basis von Hexamethylendiisocyanat, mit einem NCO-Gehalt von 19 % und einer Viskosität von 290 mPas (23°C) (Basonat HA 3000, Handelsprodukt der Firma BASF SE, Ludwigshafen). Dabei erhält man eine Polyisocyanatmischung mit folgenden Kennzahlen: NCO-Gehalt 9,0%, Viskosität 3800 mPas (23°C)

### Beispiel 3

### Herstellung eines Isocyanatgruppen aufweisenden Prepolymeren, Komponente i)

2200 g des handelsüblichen Allophanatgruppen und Isocyanuratgruppen aufweisenden Polyisocyanates auf Basis von Hexamethylendiisocyanat, mit einem NCO-Gehalt von 19 % und einer Viskosität von 290 mPas (23°C) aus Beispiel 2 (Basonat HA 3000, Handelsprodukt der Firma BASF SE, Ludwigshafen) werden mit 1800 g eines auf Propylenglykol gestarteten Polypropylenoxidpolyethers vom mittleren Molekulargewicht 2000 bei einer Temperatur von 80°C für 15 Stunden unter Rühren zur Reaktion gebracht. Dabei erhält man eine Polyisocyanatmischung mit einem NCO-Gehalt von 8,5 % und einer Viskosität von 2900 mPas (23°C).

### Beispiel 4

### Herstellung einer aminfunktionellen Mischung, (Komponenten ii) und iii))

In einem handelsüblichen Labordissolver wird eine NH-funktionelle Mischung hergestellt auf Basis der nachfolgend genannten Komponenten:
Polyasparaginsäureester auf Basis von Diaminodicyclohexylmethan und Maleinsäurediethylester, Desmophen® NH 1420, Handelsprodukt der Fa. Bayer Materialscience, Leverkusen 660g
Difunktioneller Polypropylenglykol-Polyether vom Molekulargewicht 2000, Fa. Syskem Chemie GmbH, Wuppertal 110g
Martinal ON 313, Aluminiumhydroxid der Fa. Martinswerk GmbH, Bergheim 740g
Eisenoxid-Pigment Bayferrox schwarz 306 der Fa. Lanxess Deutschland GmbH, Köln 10g
Tris-2-Ethylhexylphosphat, Disflamoll TOF der Fa. Lanxess Deutschland GmbH, Köln 66g
Titandioxid-Weißpigment, Kronos1001 der Fa. Kronos International, Leverkusen 66g
Schwerspat, Bariflor 9210 der Fa. Minerals Girona SA, Spanien 110g
Kieselsäure HDK H18, Thixotropiermittel der Fa. Wacker Chemie AG, München 6g
Entschäumer BYK 066 der Fa. Byk Chemie,Wesel 2g
Tinuvin B75, Licht- und UV-Schutzmittel der Fa. BASF SE, Ludwigshafen 5g

### Beispiel 5

### Herstellung einer aminfunktionellen Mischung, (Komponenten ii) und iii))

In die Mischung der Komponenten ii) und iii) aus Beispiel 4 werden bei niedriger Drehzahl des Dissolvers insgesamt 355g Gummimehl, hergestellt durch Vermahlung von LKW Altreifen auf Basis NR-SBR-Kautschuk (Typ K0204R der Fa. Mülsener Rohstoff- und Handelsgesellschaft mbh), eingearbeitet.

### Beispiel 6

### Herstellung eines Reaktivsystems

718g der Mischung aus Beispiel 4 werden mit 520 g des Polyisocyanates aus Beispiel 1 und 12 g Xylol durch Rühren mit einem Spatel bei einer Temperatur von 21°C intensiv vermischt. Es entsteht eine gebrauchsfertige Beschichtungsmasse mit einer Topfzeit von 25 Minuten.

Der ausgehärtete polymere Film hat bei 23°C eine Shore Härte von A72.

Die Beschichtung genügt den Kriterien der EOTA-Leitlinie ETAG 005 entsprechend den Kategorien P4 (Durchstoßfestigkeit = besondere Nutzlast), TH4 (Beständigkeit gegenüber hoher Temperatur, extrem hohe Temperatur, 90°C) und TL 4 (Beständigkeit gegenüber niedriger Temperatur= extreme Tieftemperatur, -30°C)alumini

### Beispiel 7

### Herstellung eines Reaktivsystems

718g der Mischung aus Beispiel 4 werden mit 500 g des Polyisocyanates aus Beispiel 2 und 12 g Butylacetat durch Rühren mit einem Spatel bei einer Temperatur von 21°C intensiv vermischt. Es entsteht eine gebrauchsfertige Beschichtungsmasse mit einer Topfzeit von 25 Minuten.

Der ausgehärtete polymere Film hat bei 23°C eine Shore Härte von A70.

Die Beschichtung genügt den Kriterien der EOTA-Leitlinie ETAG 005 entsprechend den Kategorien P4 (Durchstoßfestigkeit), TH4 (Beständigkeit gegenüber hoher Temperatur) und TL 4 (Beständigkeit gegenüber niedriger Temperatur).

### Beispiel 8

### Herstellung eines Reaktivsystems

718g der Mischung aus Beispiel 4 werden mit 550 g des Polyisocyanates aus Beispiel 3 durch Rühren mit einem Spatel bei einer Temperatur von 21°C intensiv vermischt. Es entsteht eine gebrauchsfertige Beschichtungsmasse mit einer Topfzeit von 25 Minuten.

Der ausgehärtete polymere Film hat bei 23°C eine Shore Härte von A68

Die Beschichtung genügt den Kriterien der EOTA-Leitlinie ETAG 005 entsprechend den Kategorien P4 (Durchstoßfestigkeit), TH4 (Beständigkeit gegenüber hoher Temperatur) und TL 4 (Beständigkeit gegenüber niedriger Temperatur)

### Beispiel 9

### Herstellung eines Reaktivsystems

862g der Mischung aus Beispiel 5 werden mit 550 g des Polyisocyanates aus Beispiel 3 und 14 g Xylol durch Rühren mit einem Spatel bei einer Temperatur von 21°C intensiv vermischt. Es entsteht eine gebrauchsfertige Beschichtungsmasse mit einer Topfzeit von 25 Minuten.

Der ausgehärtete polymere Film hat bei 23°C eine Shore Härte von A70.

Die Beschichtung genügt den Kriterien der EOTA-Leitlinie ETAG 005 entsprechend den Kategorien P4 (Durchstoßfestigkeit), TH4 (Beständigkeit gegenüber hoher Temperatur) und TL 4 (Beständigkeit gegenüber niedriger Temperatur)

### Beispiel 10

### Vergleich der Beschichtungssysteme mit Beschichtungssystemen des Standes der Technik im Hinblick auf die Durchstoßfestigkeit.

In Anlehnung an die EOTA-Leitlinie ETAG 005 wurden Versuche zur Durchstoßfestigkeit durchgeführt: Hierzu wurden alle Beschichtungssysteme bei einer Temperatur von 21°C mit einer Menge von 3 kg Beschichtungsmaterial pro m² auf eine handelsübliche beschieferte Dachbahn (Vedatect PYE PV200 S5 EN der Fa. Vedag GmbH, Bamberg Deutschland) ohne verstärkendes Vliesmaterial in gleichmäßiger Schichtdicke aufgebracht. Die Beschichtungen wurden 7 Tage bei Umgebungstemperatur gealtert. Anschließend wurden Stücke der beschieferten Dachbahn (Maße 30cm * 30cm) auf handelsübliche EPS-Dämmplatte der Stärke 10 cm (Styrodur 3035 CS der Fa. BASF, Ludwigshafen, Deutschland) aufgelegt und die Versuche zur Durchstoßfestigkeit bei den angegebenen Temperaturen durchgeführt:
Durchstoß statisch: in Anlehnung an EOTA Technical Report TR007, Stempel mit Durchmesser 10mm, Belastung 250N,
Durchstoß dynamisch: in Anlehnung an EOTA Technical Report TR006, Schlagkörper I4 mit runder Aufschlagfläche vom Durchmesser 6mm, Belastung 5,9J

| | Durchstoß Statisch 20°C | Durchstoß Dynamisch 20°C | Durchstoß Dynamisch -20°C |
|---|---|---|---|
| Reaktivsystem aus Beispiel 6 | + | + | + |
| Reaktivsystem aus Beispiel 7 | + | + | + |
| Reaktivsystem aus Beispiel 8 | + | + | + |
| Reaktivsystem aus Beispiel 9 | + | + | + |
| 2K-Beschichtungssystem auf Acrylatbasis¹⁾ | + | - Rissbildung | - Rissbildung |
| 1K-Beschichtungssystem auf Polyurethanbasis²⁾ | - Durchstoß | + | + |
| 2K-Beschichtungssystem auf Polyurethanbasis³⁾ | - Durchstoß | + | + |
| 2K-Beschichtungssystem auf Polyurethan/Epoxidharzbasis⁴⁾ | + | + | - Rissbildung |
| 1K-Beschichtungssystem auf Basis silanisiertem Polyurethan⁵⁾ | - Durchstoß | - Durchstoß | - Durchstoß |
| 2K-Beschichtungssystem auf Basis ungesättigter Polyester⁶⁾ | + | + | - Rissbildung |

| | | | |
|---|---|---|---|
| 1) Triflex ProDetail Sensitive, Handelsprodukt der Fa. Triflex GmbH & Co.KG, Minden, Deutschland 2) Enkopur, Handelsprodukt der Fa. Enke-Werk, Johannes Enke GmbH & Co.KG, Düsseldorf, Deutschland 3) Kemperol 2K-PUR, Handelsprodukt der Fa. Kemper System GmbH & Co.KG, Vellmar, Deutschland 4) Frankolon TexTura, Handelsprodukt der Fa. Franken-Systems GmbH, Kitzingen Deutschland 5) Frankosil 1K, Handelsprodukt der Fa. Franken-Systems GmbH, Kitzingen Deutschland 6) Kemperol V210, Handelsprodukt der Fa. Kemper System GmbH & Co.KG, Vellmar, Deutschland | | | |

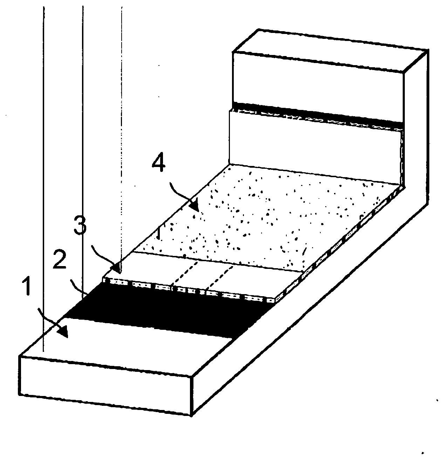

Im Folgenden wird die Erfindung in Bezug auf die Fig. 1 näher erläutert. Darin wird eine erfindungsgemäße Bauwerksbeschichtung auf einen mineralischen Untergrund 1 gezeigt, bestehend aus
- einer ersten Lage, einer Grundierung 2 auf Basis von Isocyanatgruppen aufweisenden Prepolymeren und aminofunktionellen Polyasparaginsäureestern aufgebracht wird,
- einer zweiten Lage einer Schicht 3 umfassend ein Reaktivsystem enthaltend
   i) mindestens ein freie Isocyanatgruppen aufweisendes Prepolymer mit einem Gehalt an aliphatisch gebundenen NCO-Gruppen von 7,0 bis 12 Gew. -%, erhältlich durch Urethanisierung von aliphatischen Di- oder Polyisocyanaten mit mindestens einem durch Alkoxylierung hydroxyfunktioneller Startermoleküle erhältlichen Polyoxyalkylenpolyol mit einer mittleren Hydroxyfunktionalität von 1,5 bis 3 und einem Äquivalentgewicht von mindestens 400 g/Mol,
   ii) mindestens einen aminofunktionellen Polyasparaginsäureester der 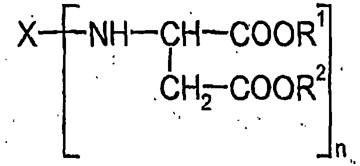 allgemeinen Formel
      in der X für einen n-wertigen organischen Rest steht, der durch Entfernung der Aminogruppen aus einem Polyamin, ausgewählt aus der Gruppe 1-Amino-3, 3, 5-trimethyl-5-aminomethyl-cyclohexan, 2, 4-und/oder 2, 6-Hexahydrotoluylendiamin, 2, 4'- und/oder 4, 4'- Diamino-dicyclohexylmethan, 3, 3'-Dimethyl-4, 4'-diaminodicyclohexymethan, 2, 4, 4'-Triamino-5-methyl-dicyclohexylmethan erhalten wird und R1 und R2 für eine Methyl- oder eine Ethylgruppe stehen
   iii) Füllstoffe, Hilfs- und Zusatzstoffe und
- einer dritten Lage, einer Verschleißbeschichtung 4 auf Basis von Isocyanatgruppen aufweisenden Prepolymeren und aminofunktionellen Polyasparaginsäureestern.

## Patentansprüche

1. Verwendung eines Reaktivsystems zur Bauwerksabdichtung, wobei das Reaktivsystem enthält
i) mindestens ein freie isocyanatgruppen aufweisendes Prepolymer mit einem Gehalt an aliphatisch gebundenen NCO-Gruppen von 7,0 bis 12 Gew. -%, erhältlich durch Urethanisierung von aliphatischen Di- oder Polyisocyanaten mit mindestens einem durch Alkoxylierung hydroxyfunktioneller Startermoleküle erhältlichen Polyoxyalkylenpolyol mit einer mittleren Hydroxyfunktionalität von 1,5 bis 3 und einem Äquivalentgewicht von mindestens 400 g/Mol,
ii) mindestens einen aminofunktionellen Polyasparaginsäureester der allgemeinen Formel 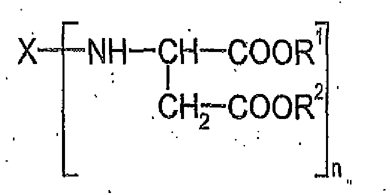 in der X für einen n-wertigen organischen Rest steht, der durch Entfernung der Aminogruppen aus einem Polyamin, ausgewählt aus der Gruppe 1-Amino-3, 3, 5-trimethyl-5-aminomethyl-cyclohexan, 2, 4-und/oder 2, 6-Hexahydrotoluylendiamin, 2, 4'- und/oder 4, 4'- Diamino-dicyclohexylmethan, 3, 3'-Dimethyl-4, 4'-diaminodicyclohexymethan, 2, 4, 4'-Triamino-5-methyl-dicyclohexylmethan erhalten wird und R1 und R2 für eine Methyl- oder eine Ethylgruppe stehen,
iii) Füllstoffe, Hilfs- und Zusatzstoffe.

2. Verwendung eines Stoffgemischs nach Anspruch 1, wobei das mindestens eine freie Isocyanatgruppen aufweisende Prepolymer mit einem Gehalt an aliphatisch gebundenen NCO-Gruppen von 7,5 bis 11 Gew. -% enthalten ist.

3. Verwendung eines Stoffgemischs nach Anspruch 1, wobei das mindestens eine freie Isocyanatgruppen aufweisende Prepolymer mit einem Gehalt an aliphatisch gebundenen NCO-Gruppen von 8 bis 10 Gew.-% enthalten ist.

4. Verwendung eines Stoffgemischs nach einem der vorangehenden Ansprüche, wobei das mindestens eine freie Isocyanatgruppen aufweisende Prepolymer durch Umsetzung eines Polyisocyanates auf Basis von Hexamethylendiisocyanat mit einem oder mehreren durch Alkoxylierung hydroxyfunktioneller Startermoleküle erhältlichen Polyoxyalkylenpolyolen mit einer mittleren Hydroxyfunktionalität von 1,5 bis 3 und einem Äquivalentgewicht von mindestens 400 g/Mol, erhältlich ist.

5. Verwendung eines Stoffgemischs nach einem der Ansprüche 1 bis 3, wobei das mindestens eine freie Isocyanatgruppen aufweisende Prepolymer durch Umsetzung eines Polyisocyanates auf Basis von Hexamethylendiisocyanat mit einem oder mehreren durch Alkoxylierung hydroxyfunktioneller Startermoleküle erhältlichen Polyoxyalkylenpolyolen mit einer mittleren Hydroxyfunktionalität von 1,8 bis 2,2 und einem Äquivalentgewicht von 700 bis 2000 g/Mol, erhältlich ist.

6. Verwendung eines Stoffgemischs nach einem der vorangehenden Ansprüche, wobei das mindestens eine freie Isocyanatgruppen aufweisende Prepolymer durch Umsetzung eines Polyisocyanates auf Basis von Hexamethylendiisocyanat mit Allophanat und/oder Isocyanuratstrukturen mit einem oder mehreren durch Alkoxylierung hydroxyfunktioneller Startermoleküle erhältlichen Polyoxyalkylenpolyolen mit einer mittleren Hydroxyfunktionalität von 1,8 bis 2,2 und einem Äquivalentgewicht von 700 bis 2000 g/Mol, erhältlich ist.

7. Verwendung eines Stoffgemischs nach einem der vorangehenden Ansprüche, wobei Polyasparaginsäureester eingesetzt werden, worin R1 und R2 jeweils für eine Ethylgruppe stehen und X für einen 2 wertigen Rest, wie er durch Entfernung der Aminogruppen des 4,4'-Diaminodicyclohexylmethans entsteht.

8. Verwendung eines Stoffgemischs gemäß einem der vorangehenden Ansprüche, wobei der Zusatzstoff anorganische Flammschutzmittel umfasst.

9. Verwendung eines Stoffgemischs gemäß einem der vorangehenden Ansprüche, wobei der Füllstoff Gummimehl umfasst.

10. Bauwerksbeschichtung mit mindestens einer Schicht umfassend ein Reaktivsystem enthaltend
i) mindestens ein freie Isocyanatgruppen aufweisendes Prepolymer mit einem Gehalt an aliphatisch gebundenen NCO-Gruppen von 7,0 bis 12 Gew. -%, erhältlich durch Urethanisierung von aliphatischen Di- oder Polyisocyanaten mit mindestens einem durch Alkoxylierung hydroxyfunktioneller Startermoleküle erhältlichen Polyoxyalkylenpolyol mit einer mittleren Hydroxyfunktionalität von 1,5 bis 3 und einem Äquivalentgewicht von mindestens 400 g/Mol,
ii) mindestens einen aminofunktionellen Polyasparaginsäureester der allgemeinen Formel 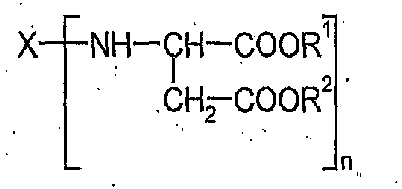 in der X für einen n-wertigen organischen Rest steht, der durch Entfernung der Aminogruppen aus einem Polyamin, ausgewählt aus der Gruppe 1-Amino-3, 3, 5-trimethyl-5-aminomethyl-cyclohexan, 2, 4-und/oder 2, 6-Hexahydrotoluylendiamin, 2, 4'- und/oder 4, 4'- Diamino-dicyclohexylmethan, 3, 3'-Dimethyl-4, 4'-diaminodicyclohexymethan, 2, 4, 4'-Triamino-5-methyl-dicyclohexylmethan erhalten wird und R1 und R2 für eine Methyl- oder eine Ethylgruppe stehen
iii) Füllstoffe, Hilfs- und Zusatzstoffe.

11. Bauwerksbeschichtung nach Anspruch 10, umfassend eine Grundierung (2) auf Basis von Isocyanatgruppen aufweisenden Prepolymeren und aminofunktionellen Polyasparaginsäureestern.

12. Bauwerksbeschichtung nach einem der Ansprüche 10 oder 11, umfassend eine Verschieißbeschichtung (4) auf Basis von Isocyanatgruppen aufweisenden Prepolymeren und aminofunktionellen Polyasparaginsäureestern.

13. Bauwerksbeschichtung nach Anspruch 10 bestehend aus
- einer ersten Schicht umfassend eine Grundierung (2) auf Basis von Isocyanatgruppen aufweisenden Prepolymeren und aminofunktionellen Polyasparaginsäureestern aufgebracht wird,
- einer zweiten Schicht umfassend ein Reaktivsystem (3) enthaltend
i) mindestens ein freie Isocyanatgruppen aufweisendes Prepolymer mit einem Gehalt an aliphatisch gebundenen NCO-Gruppen von 7,0 bis 12 Gew. -%, erhältlich durch Urethanisierung von aliphatischen Di- oder Polyisocyanaten mit mindestens einem durch Alkoxylierung hydroxyfunktioneller Startermoleküle erhältlichen Polyoxyalkylenpolyol mit einer mittleren Hydroxyfunktionalität von 1,5 bis 3 und einem Äquivalentgewicht von mindestens 400 g/Mol,
ii) mindestens einen aminofunktionellen Polyasparaginsäureester der allgemeinen 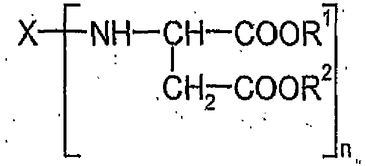 Formel
in der X für einen n-wertigen organischen Rest steht, der durch Entfernung der Aminogruppen aus einem Polyamin, ausgewählt aus der Gruppe 1-Amino-3, 3, 5-trimethyl-5-aminomethyl-cyclohexan, 2, 4-und/oder 2, 6-Hexahydrotoluylendiamin, 2, 4'- und/oder 4, 4'- Diamino-dicyclohexylmethan, 3, 3'-Dimethyl-4, 4'-diaminodicyclohexymethan, 2, 4, 4'-Triamino-5-methyl-dicyclohexylmethan erhalten wird und R1 und R2 für eine Methyl- oder eine Ethylgruppe stehen
iii) Füllstoffe, Hilfs- und Zusatzstoffe und
- einer dritten Schicht umfassend eine Verschleißbeschichtung (4) auf Basis von Isocyanatgruppen aufweisenden Prepolymeren und aminofunktionellen Polyasparaginsäureestern.

14. Bauwerk mit einer Beschichtung (1) nach einem der Ansprüche 10 bis 13.

## Claims

1. Use of a reactive system for the sealing of building structures, wherein the reactive system includes:
i) at least one prepolymer having free isocyanate groups and having a content of from 7.0 to 12% by weight of aliphatically bound NCO groups, obtainable by urethanization of aliphatic di- or polyisocyanates with at least one polyoxyalkylene polyol obtainable by alkoxylation of hydroxy-functional starter molecules and having an average hydroxy functionality of from 1.5 to 3 and an equivalent weight of at least 400 g/mol,
ii) at least one amino-functional polyaspartic acid ester of the general formula 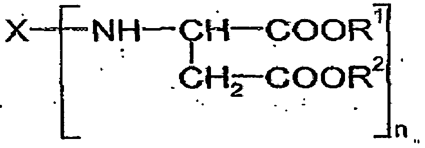 in which X represents an n-valent organic radical obtained by removing the amino groups from a polyamine selected from the group consisting of 1-amino-3, 3,5-trimethyl-5-aminomethyl-cyclohexane, 2,4- and/or 2,6-hexahydrotoluylenediamine, 2,4'- and/or 4,4'-diamino-dicyclohexylmethane, 3,3'-dimethyl-4, 4'-diamino-dicyclohexymethane, 2,4,4'-triamino-5-methyl-dicyclohexylmethane and R1 and R2 represent a methyl group or an ethyl group,
(iii) fillers, auxiliaries and additives.

2. Use of a mixture of substances according to Claim 1, wherein the at least one prepolymer having free isocyanate groups is present with a content of from 7.5 to 11% by weight of aliphatically bound NCO groups.

3. Use of a mixture of substances according to claim 1, wherein the at least one prepolymer having free isocyanate groups is present with a content of from 8 to 10% by weight of aliphatically bound NCO groups.

4. Use of a mixture of substances according to one of the preceding claims, wherein the at least one prepolymer having free isocyanate groups can be obtained by reacting of a polyisocyanate based on hexamethylene diisocyanate with one or more polyoxyalkylene polyols obtainable by alkoxylation of hydroxy-functional starter molecules and having an average hydroxy functionality of from 1.5 to 3 and an equivalent weight of at least 400 g/mol.

5. Use of a mixture of substances according to one of claims 1 to 3, wherein the at least one prepolymer having free isocyanate groups can be obtained by reacting of a polyisocyanate based on hexamethylene diisocyanate with one or more polyoxyalkylene polyols obtainable by alkoxylation of hydroxy-functional starter molecules and having an average hydroxy functionality of from 1.8 to 2.2 and an equivalent weight of from 700 to 2000 g/mol.

6. Use of a mixture of substances according to one of the preceding claims, wherein the at least one prepolymer having free isocyanate groups can be obtained by reacting of a polyisocyanate based on hexamethylene diisocyanate with allophanate and/or isocyanurate structures with one or more polyoxyalkylene polyols obtainable by alkoxylation of hydroxy-functional starter molecules and having an average hydroxy functionality of from 1.8 to 2.2 and an equivalent weight of from 700 to 2000 g/mol.

7. Use of a mixture of substances according to one of the preceding claims, wherein polyaspartic acid esters are used, wherein R1 and R2 each represent an ethyl group and X represents a divalent radical as formed by removal of the amino groups of 4,4'-diamino-dicyclohexylmethane.

8. Use of a mixture of substances according to one of the preceding claims, wherein the additive comprises inorganic flame retardants.

9. Use of a mixture of substances according to one of the preceding claims, wherein the filler comprises rubber powder.

10. Building structure coating having at least one layer comprising a reactive system including
i) at least one prepolymer having free isocyanate groups and having a content of from 7.0 to 12% by weight of aliphatically bound NCO groups, obtainable by urethanization of aliphatic di- or polyisocyanates with at least one polyoxyalkylene polyol obtainable by alkoxylation of hydroxy-functional starter molecules and having an average hydroxy functionality of from 1.5 to 3 and an equivalent weight of at least 400 g/mol,
ii) at least one amino-functional polyaspartic acid ester of the general formula 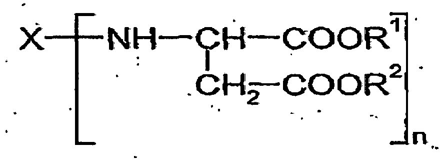 in which X represents an n-valent organic radical obtained by removing the amino groups from a polyamine selected from the group consisting of 1-amino-3,3,5-trimethyl-5-aminomethyl-cyclohexane, 2,4- and/or 2,6-hexahydrotoluylenediamine, 2,4' and/or 4,4'-diamino-dicyclohexylmethane, 3,3'-dimethyl-4, 4'-diamino-dicyclohexymethane, 2,4,4'-triamino-5-methyl-dicyclohexylmethane and R1 and R2 represent a methyl group or an ethyl group
(iii) fillers, auxiliaries and additives.

11. Building structure coating according to claim 10, comprising a primer (2) based on prepolymers having isocyanate groups and amino-functional polyaspartic acid esters.

12. Building structure coating (1) according to one of claims 10 or 11, comprising a wear-protective coating (4) based on prepolymers having isocyanate groups and amino-functional polyaspartic acid esters.

13. Building structure coating according to claim 10 consisting of
- a first layer comprising a primer (2) based on prepolymers having isocyanate groups and amino-functional polyaspartic acid esters,
- a second layer comprising a reactive system (3) including
i) at least one prepolymer having free isocyanate groups and having a content of from 7.0 to 12% by weight of aliphatically bonded NCO groups, obtainable by urethanization of aliphatic di- or polyisocyanates with at least one polyoxyalkylene polyol obtainable by alkoxylation of hydroxy-functional starter molecules and having an average hydroxy functionality of from 1.5 to 3 and an equivalent weight of at least 400 g/mol,
ii) at least one amino-functional polyaspartic acid ester of the general formula 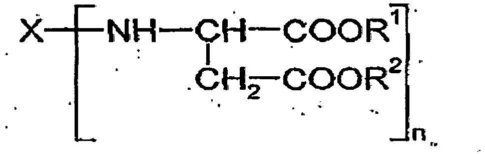 in which X represents an n-valent organic radical obtained by removing the amino groups from a polyamine selected from the group consisting of 1-amino-3,3,5-trimethyl-5-aminomethyl-cyclohexane, 2,4- and/or 2,6-hexahydrotoluylendiamine, 2,4'- and/or 4,4'-diamino-dicyclohexylmethane, 3,3'-dimethyl-4, 4'-diamino-dicyclohexymethane, 2,4,4'-triamino-5-methyl-dicyclohexylmethane and R1 is and R2 represent a methyl group or an ethyl group
(iii) fillers, auxiliaries and additives; and
- a third layer comprising a wear-protective coating (4) based on prepolymers having isocyanate groups and amino-functional polyaspartic acid esters.

14. Building structure having a coating (1) according to one of Claims 10 to 13.

## Revendications

1. Utilisation d'un système réactif destiné à l'étanchéité de structures de bâtiment, dans laquelle le système réactif comprend:
i) au moins un prépolymère ayant des groupes isocyanate libres et ayant une teneur de 7,0 à 12 % en poids de groupes NCO aliphatiquement liés, pouvant être obtenu par uréthanisation de di- ou polyisocyanates aliphatiques avec au moins un polyoxyalkylène polyol pouvant être obtenu par alcoxylation de molécules de départ à fonction hydroxy et ayant une fonctionnalité hydroxy moyenne allant de 1,5 à 3 et un poids équivalent d'au moins 400 g/mol,
ii) au moins un ester d'acide polyaspartique amino-fonctionnel de la formule générale 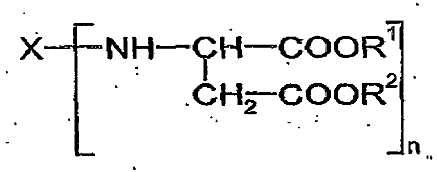 dans laquelle X représente un radical organique n-valent obtenu en éliminant les groupes amino d'une polyamine choisie dans le groupe constitué par le 1-amino-3, le 3,5-triméthyl-5-aminométhyl-5-cyclohexane, le 2,4- et/ou 2,6-hexahydrotoluylènediamine, le 2,4'- et/ou 4,4'-diamino-dicyclohexylméthane, le 3,3'-diméthyl-4,4'-diamino-dicyclohexylméthane, le 2,4,4'-triamino-5-méthyl-dicyclohexylméthane et R1 et R2 représentent un groupe méthyle ou un groupe éthyle,
iii) les charges, auxiliaires et additifs.

2. Utilisation d'un mélange de substances selon la revendication 1, dans laquelle le au moins un prépolymère ayant des groupes isocyanate libres est présent avec une teneur de 7,5 à 11% en poids de groupes NCO aliphatiquement liés.

3. Utilisation d'un mélange de substances selon la revendication 1, dans laquelle le au moins un prépolymère ayant des groupes isocyanate libres est présent avec une teneur de 8 à 10% en poids de groupes NCO aliphatiquement liés.

4. Utilisation d'un mélange de substances selon l'une des revendications précédentes, dans laquelle le au moins un prépolymère ayant des groupes isocyanate libres peut être obtenu par réaction d'un polyisocyanate à base de diisocyanate d'hexaméthylène avec un ou plusieurs polyoxyalkylène-polyols pouvant être obtenus par alcoxylation de molécules de départ à fonction hydroxy et ayant une fonctionnalité hydroxy moyenne allant de 1,5 à 3 et un poids équivalent d'au moins 400 g/mol.

5. Utilisation d'un mélange de substances selon l'une des revendications 1 à 3, dans laquelle le au moins un prépolymère ayant des groupes isocyanate libres peut être obtenu en faisant réagir un polyisocyanate à base d'hexaméthylène diisocyanate avec un ou plusieurs polyoxyalkylène-polyols pouvant être obtenus par alcoxylation de molécules de départ à fonction hydroxy et ayant une fonctionnalité hydroxy moyenne allant de 1,8 à 2,2 et un poids équivalent allant de 700 à 2000 g/mol.

6. Utilisation d'un mélange de substances selon l'une des revendications précédentes, dans laquelle le au moins un prépolymère ayant des groupes isocyanate libres peut être obtenu en faisant réagir un polyisocyanate à base de diisocyanate d'hexaméthylène avec des structures allophanate et/ou isocyanurate avec un ou plusieurs polyoxyalkylène-polyols pouvant être obtenus par alcoxylation de molécules de départ à fonction hydroxy et ayant une fonctionnalité hydroxy moyenne allant de 1,8 à 2,2 et un poids équivalent de 700 à 2000 g/mol.

7. Utilisation d'un mélange de substances selon l'une des revendications précédentes, dans laquelle des esters d'acide polyaspartique sont utilisés, dans laquelle R1 et R2 représentent chacun un groupe éthyle et X représente un radical divalent formé par élimination des groupes amino du 4,4'-diamino-dicyclohexylméthane.

8. Utilisation d'un mélange de substances selon l'une quelconque des revendications précédentes, dans laquelle l'additif comprend des retardateurs de flamme inorganiques.

9. Utilisation d'un mélange de substances selon l'une des revendications précédentes, dans laquelle la charge comprend de la poudre de caoutchouc.

10. Revêtement de structure de bâtiment ayant au moins une couche comprenant un système réactif comprenant
i) au moins un prépolymère ayant des groupes isocyanate libres et ayant une teneur de 7,0 à 12 % en poids de groupes NCO aliphatiquement liés, pouvant être obtenu par uréthanisation de di- ou polyisocyanates aliphatiques avec au moins un polyoxyalkylène-polyol pouvant être obtenu par alcoxylation de molécules de départ à fonction hydroxy et ayant une fonctionnalité hydroxy moyenne allant de 1,5 à 3 et un poids équivalent d'au moins 400 g/mol,
ii) au moins un ester d'acide polyaspartique amino-fonctionnel de la formule générale 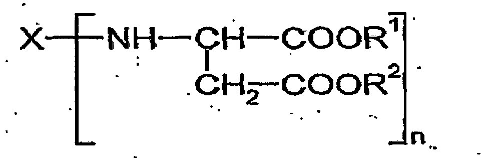 dans laquelle X représente un radical organique n-valent obtenu en éliminant les groupes amino d'une polyamine choisie dans le groupe constitué par le 1-amino-3,3, le 5-triméthyl-5-aminométhyl-5-cyclohexane, le 2,4- et/ou 2,6-hexahydrotoluylènediamine, le 2,4' et/ou 4,4'-diamino-dicyclohexylméthane, le 3,3'-diméthyl-4,4'-diamino-dicyclohexylméthane, le 2,4,4'-triamino-5-méthyl-dicyclohexylméthane et R1 et R2 représentent un groupe méthyle ou un groupe éthyle
iii) les charges, auxiliaires et additifs.

11. Revêtement de structure de bâtiment selon la revendication 10, comprenant un primaire (2) à base de prépolymères ayant des groupes isocyanate et d'esters d'acide polyaspartique amino-fonctionnels.

12. Revêtement de structure de bâtiment (1) selon l'une des revendications 10 ou 11, comprenant un revêtement anti-usure (4) à base de prépolymères ayant des groupes isocyanate et d'esters d'acide polyaspartique amino-fonctionnels.

13. Revêtement de structure de bâtiment selon la revendication 10, consistant à
- une première couche comprenant un primaire (2) à base de prépolymères ayant des groupes isocyanate et d'esters d'acide polyaspartique amino-fonctionnels,
- une seconde couche comprenant un système réactif (3) comprenant
i) au moins un prépolymère ayant des groupes isocyanate libres et ayant une teneur de 7,0 à 12 % en poids de groupes NCO aliphatiquement liés, pouvant être obtenu par uréthanisation de di- ou polyisocyanates aliphatiques avec au moins un polyoxyalkylène-polyol pouvant être obtenu par alcoxylation de molécules de départ à fonction hydroxy et ayant une fonctionnalité hydroxy moyenne allant de 1,5 à 3 et un poids équivalent d'au moins 400 g/mol,
ii) au moins un ester d'acide polyaspartique amino-fonctionnel de la formule générale 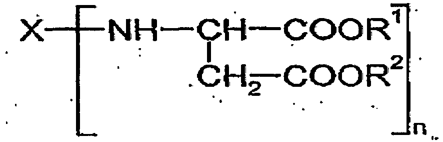 dans laquelle X représente un radical organique n-valent obtenu en éliminant les groupes amino d'une polyamine choisie dans le groupe constitué par le 1-amino-3, le 3,5-triméthyl-5-aminométhyl-5-cyclohexane, le 2,4- et/ou 2,6-hexahydrotoluyltoluylènediamine, le 2,4'- et/ou 4,4'-diamino-dicyclohexylméthane, le 3,3'-diméthyl-4,4'-diamino-dicyclohexyméthane, le 2,4,4'-triamino-5-méthyl-dicyclohexylméthane et R1 et R2 représentent un groupe méthyle ou un groupe éthyle
iii) les charges, auxiliaires et additifs; et
- une troisième couche comprenant un revêtement anti-usure (4) à base de prépolymères ayant des groupes isocyanate et d'esters d'acide polyaspartique amino-fonctionnels.

14. Structure de bâtiment ayant un revêtement (1) selon l'une des revendications 10 à 13.
